# EUROPEAN PATENT APPLICATION

(11) **EP 4 310 142 A1**
(43) Date of publication of application: **24.01.2024**
(21) Application number: 22771054.8
(22) Date of filing: 25.02.2022
(51) Int. Cl.: C08L 23/08, B65D 65/40, C08L 25/02, C08L 45/00, C09J 7/35, C09J 11/08, C09J 123/08

(54) **HEAT-SEALABLE RESIN COMPOSITION, HEAT SEAL MATERIAL, PACKAGING MATERIAL, LID MATERIAL, AND PACKAGING CONTAINER**

(30) Priority: 18.03.2021 JP 2021044951
(71) Applicant: Dow-Mitsui Polychemicals Co., Ltd., Tokyo 104-0028 (JP)
(72) Inventor: NISHIJIMA, Koichi, Ichihara-shi, Chiba 299-0108 (JP); NAKANO, Shigenori, Ichihara-shi, Chiba 299-0108 (JP); SAKUMA, Masami, Ichihara-shi, Chiba 299-0108 (JP); TAKAOKA, Hiroki, Ichihara-shi, Chiba 299-0108 (JP)
(74) Representative: Gulde & Partner
(86) International application number: PCT/JP2022/007991
(87) International publication number: WO 2022/196298

(57) **Abstract**

A heat sealable resin composition includes an ethylene-vinyl ester copolymer (A), and
a tackifier resin (B), a content ratio of a constituent unit derived from a vinyl ester included in the ethylene-vinyl ester copolymer (A) is 8% by mass or more with respect to total copolymer constituent units constituting the ethylene-vinyl ester copolymer (A), and the tackifier resin (B) includes an alicyclic hydrocarbon resin (B1) and an aromatic hydrocarbon resin (B2).

## Description

### Technical Field

The present invention relates to a heat sealable resin composition, a heat sealable material, a packaging material, a lid material and a packaging container.

### Background Art

Packaging containers are widely used as containers for foods, pharmaceuticals, or the like. Various types of heat sealable materials have been proposed and put into practical use for hermetically sealing these packaging containers with lids. As such a heat sealable material, for example, a resin composition including an ethylene-vinyl ester copolymer is known.

As a technology related to a resin composition including such an ethylene-vinyl ester copolymer, in Patent Document 1, an adhesive for a lid sealant of a container is proposed and is characterized in that from 10 to 50 parts by weight of an ethylene-vinyl acetate copolymer (A) with a vinyl acetate content of from 3 to 15% by weight, from 10 to 50 parts by weight of an ethylene-vinyl acetate copolymer (B) with a vinyl acetate content of from 8 to 25% by weight, and from 5 to 40 parts by weight of a tackifier resin (C) (total of (A), (B) and (C) is 100 parts by weight) are included, the difference between the vinyl acetate content of the ethylene-vinyl acetate copolymer (A) and the vinyl acetate content of the ethylene-vinyl acetate copolymer (B) is from 3 to 20% by weight, and the vinyl acetate content of the ethylene-vinyl acetate copolymer (A) is smaller than the vinyl acetate content of the ethylene-vinyl acetate copolymer (B).

Further, in Patent document 2, a sealant adhesive for polyethylene terephthalate is proposed that includes from 50 to 92% by weight of an ethylene-vinyl acetate copolymer (A) consisting of from 68 to 90% by weight of ethylene residue unit and from 3 to 32% by weight of vinyl acetate residue unit and having a melt flow rate measured in accordance with JIS K 6924-1 of from 1 to 40 g/10min, from 3 to 30 by weight of an ethylene-vinyl acetate copolymer saponified product (B) consisting of from 50 to 94% by weight of ethylene residue unit and from 0 to 40% by weight of vinyl acetate residue unit and from 1.2 to 50% by weight of vinyl alcohol residue unit and from 5 to 20% by weight of a tackifier (C) (total of (A), (B) and (C) is 100 parts by weight) and has a melt flow rate measured in accordance with JIS K 6924-1 of from 1 to 100 g/10min.

Further, in Patent Document 3, a hot melt composition is proposed that includes an ethylene-unsaturated ester copolymer (A): from 20 to 45% by weight, a styrene monomer-grafted polyethylene wax (B): from 3 to 45% by weight, and a wax (C) with a melting point of 40°C or higher and lower than 80°C, and a saybolt universal viscosity of from 20 to 300 seconds at 120°C: from 30 to 70% by weight, and a total of the wax (B) and the wax (C) is from 50 to 80% by weight.

### Citation List

### Patent Documents

[Patent Document 1] Japanese Patent Application Laid-Open (JP-A) No. 2018-76398
[Patent Document 2] JP-A No. 2017-132851
[Patent Document 3] JP-A No. 2017-149850

### SUMMARY OF INVENTION

### Technical Problem

In recent years, in the food packaging market, there has been an increasing shift from a mating lid-type container to a type of container in which a lid material is heat-sealed to a container body. Polyethylene, polystyrene and the like are widely used as the container body. Amorphous polyethylene terephthalate (hereinafter also referred to as "APET") has also attracted attention as a container body. However, in conventional heat sealable materials, it was difficult to obtain sufficient peeling strength to APET, which is the container body, while maintaining the transparency of the heat sealable material. Moreover, there was a problem that the transparency of the heat sealable material was impaired when the peeling strength of the heat sealable material to APET was tried to be increased. This problem was particularly noticeable when amorphous polyethylene terephthalate coated with silicone (hereinafter also referred to as "si-APET") was used for the container body, and there has been a demand for a heat sealable material exhibiting sufficient peeling strength to APET while maintaining the transparency of the heat sealable material.

The present disclosure is made in view of the above, the object is to provide a heat sealable resin composition capable of manufacturing a heat sealable material excellent in transparency and having an excellent peeling strength to APET and si-APET, and a heat sealable material, a packaging material, a lid material and a packaging container that are obtained from the heat sealable resin composition.

### Solution to Problem

The specific means to solve the above problems include the following aspects.
<1> A heat sealable resin composition, comprising:
   an ethylene-vinyl ester copolymer (A), and
   a tackifier resin (B),
   wherein a content ratio of a constituent unit derived from a vinyl ester included in the ethylene-vinyl ester copolymer (A) is 8% by mass or more with respect to total copolymer constituent units constituting the ethylene-vinyl ester copolymer (A), and
   wherein the tackifier resin (B) includes an alicyclic hydrocarbon resin (B 1) and an aromatic hydrocarbon resin (B2).
<2> The heat sealable resin composition according to <1>, wherein a content ratio of the tackifier resin (B) is from 1% by mass to 50% by mass in a case in which a total mass of resin components included in the heat sealable resin composition is 100% by mass.
<3> The heat sealable resin composition according to <1> or <2>, wherein a softening point of the aromatic hydrocarbon resin (B2) is from 70°C to 140°C.
<4> The heat sealable resin composition according to any one of <1> to <3>, wherein a mass ratio (B2/(B 1+B2)) of a content of the aromatic hydrocarbon resin (B2) with respect to a total content of the alicyclic hydrocarbon resin (B1) and the aromatic hydrocarbon resin (B2) is from 0.05 to 0.8.
<5> The heat sealable resin composition according to any one of <1> to <4>, wherein a content ratio of the ethylene-vinyl ester copolymer (A) is from 50% by mass to 95% by mass in a case in which a total mass of resin components included in the heat sealable resin composition is 100% by mass.
<6> The heat sealable resin composition according to any one of <1> to <5>, wherein a mass ratio (B/(A+B)) of a content of the tackifier resin (B) with respect to a total content of the ethylene-vinyl ester copolymer (A) and the tackifier resin (B) is from 0.05 to 0.5.
<7> The heat sealable resin composition according to any one of <1> to <6>, wherein a haze measured by the following method is less than 6.0%:
   (method)
   using a 40mmϕ three-type three-layer cast molding machine, low-density polyethylene (density = 917 kg/m³, MFR = 23 g/10 min) and the heat-sealable resin composition that are to be co-extruded are stacked by cast molding with an air knife at each of a processing temperature of 200°C and a processing speed of 30 m/min to obtain a packaging material of low-density polyethylene (thickness 22 µm)/heat sealable resin composition layer (thickness 8 µm), and next, the haze of the obtained packaging material is measured with a haze meter in accordance with JIS K 7136:2000.
<8> A heat sealable material configured by the heat sealable resin composition according to any one of <1> to <7>.
<9> A packaging material comprising: a substrate layer, and a heat sealable layer including the heat sealable material according to <8> provided on one face of the substrate layer.
<10> A lid material comprising the packaging material according to <9>.
<11> A packaging container comprising: a container body with an opening, and the lid material according to <10> as a lid on the opening of the container body.
<12> The packaging container according to <11>, wherein at least part of the container body includes amorphous polyethylene terephthalate.
<13> The packaging container according to <11> or <12>, wherein at least part of the container body includes amorphous polyethylene terephthalate coated with silicone.

### Advantageous Effects of Invention

According to the present disclosure, a heat sealable resin composition capable of manufacturing a heat sealable material excellent in transparency and having an excellent peeling strength to APET and si-APET, and a heat sealable material, a packaging material, a lid material and a packaging container that are obtained from the heat sealable resin composition can be provided.

### DESCRIPTION OF EMBODIMENTS

Hereinafter, an embodiment that is one example of the present disclosure will be explained. The present disclosure is not limited to the following embodiment and appropriate modifications can be made and implemented within the scope of the purpose of the present disclosure.

In the present disclosure, a numerical value range expressed using "to" includes numerical values before and after "to". In stepwise numerical value ranges stated in the present disclosure, the upper limit value or the lower limit value stated in one numerical value range may be replaced with the upper limit value or the lower limit value of another stated stepwise numerical value range. In addition, in a numerical value range stated in the present disclosure, the upper limit value or the lower limit value of this numerical value range may be replaced with values shown in Examples.

In the present disclosure, when there are multiple substances corresponding to each component in the composition, an amount of each component in the composition means an amount of the multiple substances present in the composition unless otherwise specified.

In the present disclosure, (meth)acrylic acid means an acrylic acid and methacrylic acid.

In the present disclosure, a total mass of the resin components means a total mass of an ethylene-vinyl ester copolymer (A), an ethylene-unsaturated carboxylic acid ester copolymer (B), a tackifier resin (C), and another resin included as need.

### [Heat Sealable Resin Composition]

A heat sealable resin composition of the present disclosure includes an ethylene-vinyl ester copolymer (A), and a tackifier resin (B), wherein a content ratio of a constituent unit derived from a vinyl ester included in the ethylene-vinyl ester copolymer (A) is 8% by mass or more with respect to total copolymer constituent units constituting the ethylene-vinyl ester copolymer (A), and wherein the tackifier resin (B) includes an alicyclic hydrocarbon resin (B1) and an aromatic hydrocarbon resin (B2).

In recent years, in the food packaging market, there has been an increasing shift from a mating lid-type container to a type of container in which a lid material is heat-sealed to a container body. The present inventors have investigated resin compositions including an ethylene-vinyl ester copolymer (A) and a tackifier resin (B) as a heat sealable resin composition used as the heat sealable material for the lid material to be adhered to the container body.

However, when the alicyclic hydrocarbon resin (B1) is used as the tackifier resin (B) included in the heat sealable resin composition, adhesiveness of a heat sealable material to amorphous polyethylene terephthalate (si-APET) coated with silicone was insufficient. Furthermore, when the aromatic hydrocarbon resin (B2) is used as the tackifier resin (B) included in the heat sealable resin composition, adhesiveness of a heat sealable material to si-APET was insufficient and it was difficult to prepare a heat sealable material excellent in transparency.

The inventors also considered a combination of the alicyclic hydrocarbon resin (B 1) and the aromatic hydrocarbon resin (B2) as the tackifier resin (B), but it was difficult to achieve both adhesiveness of a heat sealable material to si-APET and excellent transparency of the heat sealing material even in the case of the combination.

In consideration of the above, the present inventors have found it possible to produce a heat sealable material excellent in transparency and with excellent peeling strength to APET and si-APET by using a heat sealable resin composition including an ethylene-vinyl ester copolymer (A) in which a content ratio of a constituent unit derived from a vinyl ester is within a specific range, and the tackifier resin (B) including the alicyclic hydrocarbon resin (B 1) and the aromatic hydrocarbon resin (B2).

The heat sealable resin composition of the present disclosure is preferably used for producing a heat sealable material for a container body composed of, for example, an amorphous polyethylene terephthalate (APET), polypropylene, polyester, polycarbonate, polyvinyl chloride, or the like, and is more preferably used for producing a heat sealable material for a container body composed of an amorphous polyethylene terephthalate (si-APET) coated with silicone.

Hereinafter, each component included in the heat sealable resin composition of the present disclosure will be explained.

### <Ethylene-Vinyl Ester Copolymer (A)>

The heat sealable resin composition of the present disclosure includes an ethylene-vinyl ester copolymer (A). The ethylene-vinyl ester copolymer (A) is not particularly limited as long as it is a copolymer including a constituent unit derived from ethylene and a constituent unit derived from a vinyl ester.

The ethylene-vinyl ester copolymer (A) may be used singly or may be used in combination of two or more.

Examples of the ethylene-vinyl ester copolymer (A) include an ethylene-vinyl acetate copolymer, an ethylene-vinyl propionate copolymer, an ethylene-vinyl butyrate copolymer, and an ethylene-vinyl stearate copolymer. Among them, the ethylene-vinyl acetate copolymer is preferable.

The ethylene-vinyl ester copolymer (A) may be a copolymer only consisting of a constituent unit derived from ethylene and a constituent unit derived from a vinyl ester, or may be a copolymer including a constituent unit derived from a monomer other than ethylene or a vinyl ester.

Examples of the monomer other than ethylene or a vinyl ester include unsaturated hydrocarbons such as propylene, butene, 1,3-butadiene, pentene, 1,3-pentadiene, and 1-hexene; oxides such as vinyl sulfate and vinyl nitrate; halogen compounds such as vinyl chloride and vinyl fluoride; primary and secondary amine compounds including a vinyl group, carbon monoxide, and sulfur dioxide.

A content rate of the constituent unit derived from a vinyl ester included in the ethylene-vinyl ester copolymer (A) is 8% by mass or more with respect to total copolymer constituent units constituting the ethylene-vinyl ester copolymer (A), and from the viewpoint of balance between transparency when forming a heat sealable material and a peeling strength to si-APET, the content rate is preferably from 8% by mass to 46% by mass, more preferably from 9% by mass to 42% by mass, still more preferably from 10% by mass to 35% by mass, further more preferably from 12% by mass to 30% by mass, particularly preferably from 15% by mass to 25% by mass, especially preferably more than 15% by mass and 25% by mass or less, extremely preferably more than 18% by mass and 23% by mass or less, and most preferably from 19% by mass to 21% by mass.

A content rate of the constituent unit derived from ethylene included in the ethylene-vinyl ester copolymer (A) is preferably from 54% by mass to 92% by mass, more preferably from 58% by mass to 91% by mass, still more preferably from 65% by mass to 90% by mass, further more preferably from 70% by mass to 88% by mass, particularly preferably from 75% by mass to 85% by mass, especially preferably 75% by mass or more and less than 85% by mass, extremely preferably 77% by mass or more and less than 82% by mass and most preferably from 79% by mass to 81% by mass.

The ethylene-vinyl ester copolymer (A) may include nor may not include a constituent unit derived from a monomer other than ethylene or a vinyl ester. A content rate of the constituent unit derived from a monomer other than ethylene or a vinyl ester that may be included in the ethylene-vinyl ester copolymer may be from 0% by mass to 10% by mass, or may be from 0% by mass to 5% by mass, with respect to total copolymer constituent units constituting the ethylene-vinyl ester copolymer (A).

A melt mass flow rate (MFR; JIS K 7210: 1999, 190°C, load 2160g) of the ethylene-vinyl ester copolymer (A) is preferably from 0.1 g/10 min to 50 g/10 min, more preferably from 0.5 g/10 min to 30 g/10 min, still more preferably from 1 g/10 min to 20 g/10 min, particularly preferably from 1.5 g/10 min to 10 g/10 min, and extremely preferably from 2.0 g/10 min to 5 g/10 min.

A content rate of the ethylene-vinyl ester copolymer (A) included in the heat sealable resin composition is preferably from 50% by mass to 95% by mass, and from the viewpoint of being able to manufacture a heat sealable material having an excellent peeling strength to APET, is more preferably from 60% by mass to 90% by mass, and still more preferably from 70% by mass to 80% by mass in a case in which a total mass of resin components included in the heat sealable resin composition is 100% by mass.

A manufacturing method of the ethylene-vinyl ester copolymer (A) is not particularly limited and the ethylene-vinyl ester copolymer (A) can be manufactured by a known method. For example, it can be obtained by radical copolymerization of each polymerization component under high temperature and high pressure. It can be manufactured by either autoclave method or tubular method. A commercially available ethylene-vinyl ester copolymer (A) may also be used.

### <Tackifier Resin (B)>

The heat sealable resin composition of the present disclosure includes a tackifier agent (B). Further, the tackifier resin (B) includes an alicyclic hydrocarbon resin (B1) and an aromatic hydrocarbon resin (B2).

The alicyclic hydrocarbon resin (B1) and the aromatic hydrocarbon resin (B2) may be each independently used singly or may be each independently used in combination of two or more.

Examples of the alicyclic hydrocarbon resin (B1) include a resin obtained by polymerizing diene components in spent C4-C5 fractions after cyclodimerization, a resin obtained by polymerizing cyclic monomers such as cyclopentadiene, and a resin obtained by intranuclear hydrogenation of aromatic hydrocarbon resin. Among these, the resin obtained by intranuclear hydrogenation of aromatic hydrocarbon resin is more preferable.

Examples of the aromatic hydrocarbon resin (B2) include resins mainly composed of a C8-C10 vinyl aromatic hydrocarbon such as vinyltoluene, indene, or α-methylstyrene, styrene, or isopropenyltoluene, and resins obtained by copolymerizing at least one of these C8-C10 vinyl aromatic hydrocarbons, styrene, or isopropenyltoluene with a C4 or C5 mono- or diolefin described later (aliphatic-aromatic copolymer hydrocarbon resins). Among these, the resin mainly composed of α-methylstyrene and the resin mainly composed of styrene are more preferable, and the resin mainly composed of α-methylstyrene is still more preferable. "Mainly composed of" means that a content rate of a constituent unit derived from the component is more than 50% by mass with respect to a total constituent unit of the resin.

The heat sealable resin composition of the present disclosure may include another tackifier resin other than the alicyclic hydrocarbon resin (B1) or the aromatic hydrocarbon resin (B2). Examples of another tackifier resin include aliphatic hydrocarbon resins, coumarone-indene resins, terpene resins, and rosins.

Examples of the aliphatic hydrocarbon resins include polymers mainly composed of a C4 or C5 monoolefin or diolefin such as 1-butene, isobutylene, butadiene, 1,3-pentadiene, isoprene or piperylene.

Examples of the terpene resins include α-pinene polymers, β-pinene polymers, dipentene polymers, terpene-phenol copolymers, α-pinene-phenol copolymers, and terpene resin hydrides (hydrogenated terpene resins).

Examples of the rosins include rosins such as gum rosins, wood rosins, tall oils, and modified products thereof. Examples of the modified products include those subjected to modification such as hydrogenation, disproportionation, dimerization, and esterification.

From the viewpoint of thermal stability and flexibility, a softening point of the alicyclic hydrocarbon resin (B1) is preferably from 85°C to 155°C, more preferably from 100°C to 145°C, and still more preferably from 110°C to 130°C.

In the present disclosure, a softening point means a ring and ball softening point measured in accordance with JIS K 6863:1994.

From the viewpoint of thermal stability and flexibility, a softening point of the aromatic hydrocarbon resin (B2) is preferably from 70°C and 140°C, more preferably from 85°C to 130°C, and still more preferably from 95°C to 115°C.

From the viewpoint of a peeling strength to APET and si-APET when forming a heat sealable material and processability, handleability and the like of the resin composition, a content rate of the tackifier resin (B) included in the heat sealable resin composition is preferably from 1% by mass to 50% by mass, more preferably from 10% by mass to 40% by mass, still more preferably from 15% by mass to 30% by mass, and particularly preferably from 21% by mass to 28% by mass, in a case in which a total mass of resin components included in the heat sealable resin composition is 100% by mass.

In the heat sealable resin composition, from the viewpoint of balance between transparency when forming a heat sealable material and a peeling strength to si-APET, a mass ratio (B2/(B 1+B2)) of a content of the aromatic hydrocarbon resin (B2) with respect to a total content of the alicyclic hydrocarbon resin (B1) and the aromatic hydrocarbon resin (B2) is preferably from 0.05 to 0.8, more preferably from 0.08 to 0.6, still more preferably from 0.1 to 0.5, particularly preferably from 0.2 to 0.5, and extremely preferably from 0.3 to 0.45.

The heat sealable resin composition may include or may not include another tackifier. A mass ratio (content of another tackifier/total content of tackifier (B)) of a content of another tackifier with respect to a total content (hereinafter also referred to as "total content of tackifier (B)") of the alicyclic hydrocarbon resin (B1), the aromatic hydrocarbon resin (B2) and another tackifier may be from 0 to 0.1 or may be from 0 to 0.05.

In the heat sealable resin composition, a mass ratio (B/(A+B)) of a content of the tackifier (B) with respect to a total content of the ethylene-vinyl ester copolymer (A) and the tackifier (B) is preferably from 0.05 to 0.5, more preferably from 0.1 to 0.4, and still more preferably from 0.2 to 0.3.

In the heat sealable resin composition of the present disclosure, a total content rate of the ethylene-vinyl ester copolymer (A), and the tackifier resin (B) is preferably from 80% by mass to 100% by mass, more preferably from 85% by mass to 100% by mass, still more preferably from 90% by mass to 100% by mass, further more preferably from 95% by mass to 100% by mass, particularly preferably from 98% by mass to 100% by mass, and especially preferably more than 99% by mass and not more than 100%.

### <Other ingredients>

The heat sealable resin composition of the present disclosure may include at least one of components (hereinafter also referred to as "other components") other than the ethylene-vinyl ester copolymer (A), or the tackifier (B) within a range that does not impair the effect of the present invention. Other components are not particularly limited and examples thereof include additives, other resins such as thermoplastic resins and thermosetting resins. Examples of the additives include plasticizers, antioxidants, ultraviolet absorbers, antistatic agents, surfactants, colorants, light stabilizers, foaming agents, lubricants, crystal nucleating agents, crystallization accelerators, crystallization retarders, catalyst deactivators, inorganic fillers, organic fillers, impact modifiers, slip agents, cross-linking agents, cross-linking aids, silane coupling agents, processing aids, release agents, anti-hydrolysis agents, heat resistant stabilizers, antiblocking agents, antifog agents, flame retardants, flame retardant aids, light diffusing agents, antibacterial agents, antifungal agents, and dispersants. Other components may be used singly or in combination of two or more.

### <Physical Property of Heat Sealable Resin Composition>

In the heat sealable resin composition of the present disclosure, from the viewpoint of transparency of a heat sealable material, a haze measured by the following method is preferably less than 6.0%, more preferably 5.0% or less, and still more preferably 4.0% or less:
(method)
using a 40mmϕ three-type three-layer cast molding machine, low-density polyethylene (density = 917 kg/m³, MFR = 23 g/10 min) and the heat sealable resin composition that are to be co-extruded are stacked by a caste molding with an air knife at each of a processing temperature of 200°C and a processing speed of 30 m/min to obtain a packaging material of low-density polyethylene (thickness 22 µm)/heat sealable resin composition layer (thickness 8 µm). Then, the haze of the obtained packaging material is measured with a haze meter in accordance with JIS K 7136:2000.

In the heat sealable resin composition of the present disclosure, the lower limit of the haze measured by the above method is not particularly limited and for example may be 1.0% or more, or may be 2.0% or more.

### <Preparation Method of Heat Sealable Resin Composition>

A preparation method of the heat sealable resin composition of the present disclosure is not particularly limited and examples thereof include a method of preparing it by dry-blending and mixing the ethylene-vinyl ester copolymer (A), the tackifier (B) including the alicyclic hydrocarbon resin (B1) and the aromatic hydrocarbon resin (B2) and at least one of other components added as necessary and a method of preparing it by meltkneading these components with an extruder or the like.

### [Heat Sealable Material]

A heat sealable material of the present disclosure is configured by the aforementioned heat sealable resin composition of the present disclosure. The heat sealable material of the present disclosure is excellent in transparency and has excellent peeling strength to APET and si-APET. Since the heat sealable material of the present disclosure has excellent peeling strength to APET and si-APET, it can be particularly suitably used as a lid of container body made of APET or si-APET.

The method of manufacturing the heat sealing material is not particularly limited, and conventionally known manufacturing methods can be used. Specifically, examples thereof include a press molding method, an extrusion molding method, an injection molding method, a compression molding method, a cast molding method, a calender molding method, and an inflation molding method.

### [Packaging Material and Lid]

A packaging material of the present disclosure include a substrate layer, and a heat sealable layer including the heat sealable material of the present disclosure provided on one face of the substrate layer. Since the packaging material of the present disclosure includes the heat sealable layer including the heat sealable material of the present disclosure, it is excellent in transparency and has an excellent peeling strength to APET and si-APET. Therefore, the lid including the packaging material of the present disclosure can be particularly suitably used as a lid of container body.

In the packaging material, a thickness of the heat sealable layer is preferably from 5 µm to 200 µm, or more preferably from 10 µm to 100 µm.

The heat sealable layer may be a single layer or multiple layers of two or more layers. When the heat sealable layer has two or more layers, the heat sealable layer may be formed by stacking two or more layers of the heat sealable material of the present disclosure, or may be formed by stacking at least one heat sealable material of the present disclosure and at least one another heat sealable material. Examples of resins used for another heat sealable material include a low density polyethylene, a linear low density polyethylene, polypropylene, an ethylene-propylene copolymer, an ethylene-acrylic acid copolymer or ionomer thereof, an ethylene-methacrylic acid copolymer, or ionomer thereof, an ethylene-(meth)acrylic acid ester copolymer, an ethylene-vinyl ester copolymer, an ethylene-vinyl alcohol copolymer, a crystalline or amorphous polyester modified product, or multiple copolymers thereof or mixtures thereof.

The substrate layer is a layer that is provided for the purpose of improving handling properties, mechanical properties, conductivity, heat insulation, heat resistance, moisture resistance, or the like of the packaging material. Examples of the substrate layer include paper, a nonwoven fabric, a metal layer (aluminum foil, or the like), a polyester film, a nylon film, a polyethylene film, a polypropylene film, a polyamide film, a polyimide film, a polyvinylidene chloride film, an ethylene-vinyl alcohol copolymer film, an aluminum-deposited plastic film, a silica-deposited plastic film, an alumina-deposited plastic film, and an amorphous polyethylene terephthalate film. The substrate layer may be a single layer or a combination of two or more layers. The substrate layer may be uniaxially or biaxially stretched at any rate.

From the viewpoint of improving the adhesiveness between the substrate layer and the heat sealable layer, the substrate layer may be surface-treated. Specific examples of surface treatment include corona treatment, plasma treatment, undercoat treatment, and primer coat treatment.

A thickness of the substrate layer is preferably from 1 µm to 100 µm, more preferably from 2 µm to 50 µm, and still more preferably from 5 µm to 40 µm.

The shape of the base material layer is not particularly limited, and examples thereof include sheet-like and film-like shapes.

The packaging material of the present disclosure may be a packaging material consisting only of a substrate layer and a heat sealable layer, and from the viewpoint of imparting various functions to the packaging material, the packaging material may be provided with a layer (hereinafter, also referred to as "another layer") other than the substrate layer or the heat sealable layer. Examples of another layer include a foam layer, a metal layer, an inorganic layer, a gas barrier resin layer, an antistatic layer, a hard coat layer, an adhesive layer, an antireflection layer, and an antifouling layer. Another layer may be a single layer or a combination of two or more layers.

The adhesive layer is, for example, a layer provided to enhance the adhesiveness between layers.

As a method of stacking two or more heat sealable layers, a method of stacking a substrate layer and a heat sealable layer, or a method of stacking a substrate layer, a heat sealable layer and another layer, a known method can be used, and examples thereof include an extrusion lamination method, a co-extrusion inflation method, and a co-extrusion T-die method.

The packaging material of the present disclosure may be uniaxially or biaxially stretched at any rate.

By molding the heat sealable resin composition of the present disclosure using a molding method such as extrusion molding, injection molding, blow molding, film molding, or sheet molding, the packaging material of the present disclosure can be made into various shapes.

The shape of the packaging material is not particularly limited, and examples thereof include sheet-like and film-like shapes.

The packaging material of the present disclosure can be suitably used, for example, as a packaging material used for packaging foods, pharmaceuticals, industrial products, daily necessities, cosmetics, or the like, and can be particularly suitably used as a packaging material for foods or pharmaceuticals.

### [Packaging Container]

The packaging container of the present disclosure includes, for example, a container body with an opening, and the lid material of the afore-mentioned present disclosure as a lid on the opening of the container body. The lid material of the present disclosure is excellent in transparency and has an excellent peeling strength to APET and si-APET.

Examples of the component included in at least a part of the container body with an opening are not particularly limited, and examples thereof include a component such as amorphous polyethylene terephthalate (APET), polypropylene, polyester, polycarbonate, or polyvinyl chloride. Among them, amorphous polyethylene terephthalate (APET) is preferable, and amorphous polyethylene terephthalate (si-APET) coated with silicone is more preferable.

The aforementioned component need only be included in at least a part of the container body with an opening, and is preferably included in the part that comes into contact with the lid material of the present disclosure, and is more preferably included in the part that comes into contact with a heat sealable material included in a packaging material of the lid material.

The packaging container of the present disclosure can be suitably used, for example, as a packaging container used for packaging foods, pharmaceuticals, industrial products, daily necessities, cosmetics, or the like and can be particularly suitably used as a packaging container for foods or pharmaceuticals.

The heat sealable resin composition of the present disclosure, heat sealable material, packaging material, lid material, and packaging container have been described above, but these are examples of the present invention, and various configurations other than those described above can be adopted.

### Examples

Hereinafter, the present disclosure will be described in more detail with reference to examples, but the present disclosure is not limited to the following examples as long as the gist thereof is not exceeded.

The detail of components used in the preparation of heat sealable resin composition is shown below.

### <Another Ethylene-Vinyl Ester Copolymer>

EVA1: ethylene-vinyl ester copolymer (MFR = 7.5 g/10 min, content of constituent unit derived from ethylene = 94% by mass, content of constituent unit derived from vinyl acetate = 6% by mass)

### < Ethylene-Vinyl Ester Copolymer (A)>

EVA2: ethylene-vinyl ester copolymer (MFR = 3.0 g/10 min, content of constituent unit derived from ethylene = 90% by mass, content of constituent unit derived from vinyl acetate = 10% by mass)

EVA3: ethylene-vinyl ester copolymer (MFR = 2.5 g/10 min, content of constituent unit derived from ethylene = 81% by mass, content of constituent unit derived from vinyl acetate = 19% by mass)

### <Alicyclic Hydrocarbon Resin (B1)>

Tackifier resin 1: resin obtained by intranuclear hydrogenation of aromatic hydrocarbon resin (manufactured by Arakawa Chemical Industries, Ltd., Alcon AM-1, ball-and-ring method softening point = 115°C)

### <Aromatic Hydrocarbon Resin (B2)>

Tackifier resin 2: resin mainly consisted of α-methylstyrene (manufactured by AR BROWN Co., Ltd., SYLVARES SA100, ring-and-ball method softening point = 100°C)

### <Additive>

Slip agent: erucamide (ELA, manufactured by NOF CORPORATION)

### [Example 1 and Comparative Examples 1 to 4]

### <Preparation of Evaluation Sample>

### (1) Preparation of heat sealable resin composition

Each component was melt-kneaded at 160°C with an extruder (65 mmcp, LID = 28, tip dulmage flight screw) at the blending ratio shown in Table 1 to obtain each heat sealable resin composition in Examples and Comparative Examples.

### (2) Preparation of packaging material

Using a 40 mmcp single-layer cast molding machine, each of the various heat sealable resin compositions described above is formed into a molten film by extrusion lamination at a processing temperature of 200°C and a processing speed of 25 m/min, and the above heat sealable resin composition with a thickness of 30 µm was stacked on a substrate of a prefabricated PET (thickness 12 µm)/PE film (thickness 15 µm) to obtain a packaging material (1) of PET (thickness 12 µm)/PE (thickness 15 µm)/heat sealable resin composition layer (thickness 30 µm).

The following evaluations were performed on the obtained packaging material (1). The results are shown in Table 1.

### [Peeling strength to silicone-coated APET]

The packaging material (1) was heat-sealed on APET sheet coated with silicone with a thickness of 0.4 mm (hereinafter also referred to as "silicone-coated APET") under a pressure of 0.2 MPa, a heating temperature of 180°C, and a heating time of 1.0 second and then left at room temperature for 24 hours. After that, both sides of a 15 mm wide test piece cut out from the packaging material were pulled in opposite directions (in a peeling direction of 180°) to obtain the maximum stress.

The peel strength of the packaging material (1) to the silicone-coated APET was evaluated according to the following evaluation criteria. When the evaluation is A, the peeling strength to the silicone-coated APET is good, and when the evaluation is B, the peeling strength to the silicone-coated APET is poor.

### -Evaluation criteria-

A: Peeling strength is 8 N/15mm or more.
B: Peeling strength is less than 8 N/15mm.

### [Peeling strength to silicone-uncoated APET]

The packaging material (1) was heat-sealed on APET sheet uncoated with silicone with a thickness of 0.4 mm (hereinafter also referred to as "silicone-uncoated APET") under a pressure of 0.2 MPa, a heating temperature of 180°C, and a heating time of 1.0 second and then left at room temperature for 24 hours. After that, both sides of a 15 mm wide test piece cut out from the packaging material were pulled in opposite directions (in a peeling direction of 180°) to obtain the maximum stress.

The peel strength of the packaging material (1) to the silicone-uncoated APET was evaluated according to the following evaluation criteria. When the evaluation is A, the peeling strength to the silicone-uncoated APET is good, and when the evaluation is B, the peeling strength to the silicone-uncoated APET is poor.

### -Evaluation criteria-

A: Peeling strength is 8 N/15mm or more.
B: Peeling strength is less than 8 N/15mm.

### [Transparency]

Using a 40mmϕ three-type three-layer cast molding machine, low-density polyethylene (density = 917 kg/m³, MFR = 23 g/10 min) and each of the heat sealable resin compositions that were to be co-extruded were stacked by cast molding with an air knife at a processing temperature of 200°C and a processing speed of 30 m/min to obtain a packaging material (2) of low-density polyethylene (thickness 22 µm)/heat sealable resin composition layer (thickness 8 µm).

For the obtained packaging material (2), the haze (cloudiness, unit: %) was measured in accordance with JIS K 7136:2000 using a haze meter HM-150 manufactured by Murakami Color Research Laboratory. When the evaluation is A, the transparency of the packaging material (2) is good, and when the evaluation is B, the transparency of the packaging material (2) is poor.

The transparency of the packaging material (2) was evaluated according to the following evaluation criteria.

### -Evaluation criteria-

A: Haze is less than 6.0%.
B: Haze is 6.0% or more.

**[Table 1]**

| | | Example | Comparative Examples | | | |
|---|---|---|---|---|---|---|
| | | 1 | 1 | 2 | 3 | 4 |
| Another ethylene-vinyl ester copolymer | EVA1 [parts by mass] | | | | | 75 |
| Ethylene-vinyl ester copolymer (A) | EVA2 [parts by mass] | | 75 | | | |
| | EVA3 [parts by mass] | 75 | | 75 | 75 | |
| Tackifier resin (B) | Tackifier resin 1(B 1) [parts by mass] | 15 | 25 | 25 | | 15 |
| | Tackifier resin 1(B2) [parts by mass] | 10 | | | 25 | 10 |
| | (B2/(B1+B2)) | 0.4 | 0 | 0 | 1 | 0.4 |
| Additive | Slip agent [parts by mass] | 0.3 | 0.3 | 0.3 | 0.3 | 0.3 |
| Measurement results | Peeling strength to silicone-coated APET [N/15mm] | 10 | 0.5 | 4 | 5.5 | 2.5 |
| | Evaluation of peeling strength to silicone-coated APET | A | B | B | B | B |
| | Peeling strength to silicone-uncoated APET [N/15mm] | 13 | 17 | 12 | 9 | 19.5 |
| | Evaluation of peeling strength to silicone-uncoated APET | A | A | A | A | A |
| | Haze [%] | 3.6 | 2.8 | 4.0 | 11.4 | 6.0 |
| | Haze evaluation | A | A | A | B | B |

As is clear from Table 1, the packaging material using the heat sealable resin composition of Example 1 was excellent in the peeling strength to the silicone-coated APET, the peeling strength to the silicone-uncoated APET, and the transparency. On the other hand, the packaging material using each of the heat sealable resin composition of Comparative Examples 1 to 4 was poor in at least one of the peeling strength to the silicone-coated APET, the peeling strength to the silicone-uncoated APET, and the transparency.

From the above, it could be confirmed that, according to the heat sealable resin composition in the present embodiment, a packaging material excellent in peeling strength to the silicone-coated APET, the peeling strength to the silicone-uncoated APET, and the transparency could be realized.

The disclosure of Japanese Patent Application No. 2021-044951 filed on March 18, 2021 is incorporated herein by reference in their entirety.

All the literature, patent application, and technical standards cited herein are also herein incorporated to the same extent as provided for specifically and severally with respect to an individual literature, patent application, and technical standard to the effect that the same should be so incorporated by reference.

## Claims

1. A heat sealable resin composition, comprising:
an ethylene-vinyl ester copolymer (A), and
a tackifier resin (B),
wherein a content ratio of a constituent unit derived from a vinyl ester included in the ethylene-vinyl ester copolymer (A) is 8% by mass or more with respect to total copolymer constituent units constituting the ethylene-vinyl ester copolymer (A), and
wherein the tackifier resin (B) includes an alicyclic hydrocarbon resin (B1) and an aromatic hydrocarbon resin (B2).

2. The heat sealable resin composition according to claim 1, wherein a content ratio of the tackifier resin (B) is from 1% by mass to 50% by mass in a case in which a total mass of resin components included in the heat sealable resin composition is 100% by mass.

3. The heat sealable resin composition according to claim 1 or 2, wherein a softening point of the aromatic hydrocarbon resin (B2) is from 70°C to 140°C.

4. The heat sealable resin composition according to any one of claims 1 to 3, wherein a mass ratio (B2/(B1+B2)) of a content of the aromatic hydrocarbon resin (B2) with respect to a total content of the alicyclic hydrocarbon resin (B1) and the aromatic hydrocarbon resin (B2) is from 0.05 to 0.8.

5. The heat sealable resin composition according to any one of claims 1 to 4, wherein a content ratio of the ethylene-vinyl ester copolymer (A) is from 50% by mass to 95% by mass in a case in which a total mass of resin components included in the heat sealable resin composition is 100% by mass.

6. The heat sealable resin composition according to any one of claims 1 to 5, wherein a mass ratio (B/(A+B)) of a content of the tackifier resin (B) with respect to a total content of the ethylene-vinyl ester copolymer (A) and the tackifier resin (B) is from 0.05 to 0.5.

7. The heat sealable resin composition according to any one of claims 1 to 6, wherein a haze measured by the following method is less than 6.0%:
(method)
using a 40mmϕ three-type three-layer cast molding machine, low-density polyethylene (density = 917 kg/m³, MFR = 23 g/10 min) and the heat-sealable resin composition that are to be co-extruded are stacked by cast molding with an air knife at each of a processing temperature of 200°C and a processing speed of 30 m/min to obtain a packaging material of low-density polyethylene (thickness 22 µm)/heat sealable resin composition layer (thickness 8 µm), and next, the haze of the obtained packaging material is measured with a haze meter in accordance with JIS K 7136:2000.

8. A heat sealable material configured by the heat sealable resin composition according to any one of claims 1 to 7.

9. A packaging material comprising: a substrate layer, and a heat sealable layer including the heat sealable material according to claim 8 provided on one face of the substrate layer.

10. A lid material comprising the packaging material according to claim 9.

11. A packaging container comprising: a container body with an opening, and the lid material according to claim 10 as a lid on the opening of the container body.

12. The packaging container according to claim 11, wherein at least part of the container body includes amorphous polyethylene terephthalate.

13. The packaging container according to claim 11 or 12, wherein at least part of the container body includes amorphous polyethylene terephthalate coated with silicone.
